# EUROPEAN PATENT APPLICATION

(11) **EP 2 325 686 A1**
(43) Date of publication of application: **25.05.2011**
(21) Application number: 10188737.0
(22) Date of filing: 25.10.2010
(51) Int. Cl.: G02B 27/22, H04N 13/00

(54) **Shutter glasses for stereoscopy, image display system comprising the same and control method thereof**

(30) Priority: 17.11.2009 KR 20090111018
(71) Applicant: SAMSUNG ELECTRONICS CO., LTD., Suwon-si Gyeonggi-do 442-742 (KR)
(72) Inventor: Kim, Il-doo, Gyeonggi-do (KR); Kim, Do-youn, Seoul (KR)
(74) Representative: Van den Boeck, Wim

(57) **Abstract**

Disclosed are shutter glasses for viewing a stereoscopic image including: a left-eye shutter; a right-eye shutter; and a controller which generates an error signal indicating an error if at least one of a first and a second error condition exists, wherein the first error condition is internal to the shutter glasses, and the second error condition is external to the shutter glasses.

## Description

### BACKGROUND

### Field

Apparatuses and methods consistent with the exemplary embodiments relate to shutter glasses for stereoscopy, image display system comprising the same and control method thereof.

### Description of the Related Art

A display apparatus processes various kinds of digital and/or analog video signals and displays an image. A user can view a three-dimensional (3D) image based on a 3D video signal on a monitor, television (TV), or the like. The 3D video signal is divided into contents for a user's left eye and contents for a right eye, and the divided images are displayed for the left and right eyes, respectively.

According to a shutter glass operation method, the left and right eye portions of shutter glasses are alternately turned on and off so as to alternately show left and right images so that a user sees the divided images corresponding to the left and right eyes and can thereby view an image in 3D.

However, problems, both internal and external to the shutter glasses, may occur which can negatively affect the displaying of the left and right images in the shutter glasses. Consequently, there is a need for a user to be informed about such errors.

### SUMMARY

Exemplary embodiments address at least the above problems and/or disadvantages and other disadvantages not described above. Also, exemplary embodiments are not required to overcome the disadvantages described above, and an exemplary embodiment may not overcome any of the problems described above.

According to one or more exemplary embodiments, there is provided shutter glasses for stereoscopy which inform a user of an error condition affecting the shutter glasses, and image display system comprising the same and control method thereof.

Another exemplary embodiment provides shutter glasses for stereoscopy which detects an error condition affecting the shutter glasses, and image display system comprising the same and control method thereof.

Still another exemplary embodiment provides shutter glasses for stereoscopy which shows error information in shutter glasses in various ways, and image display system comprising the same and control method thereof.

Shutter glasses for viewing a stereoscopic image may include: a left-eye shutter; a right-eye shutter; and a controller which generates an error signal indicating an error if at least one of a first and a second error condition exists, wherein the first error condition is internal to the shutter glasses, and the second error condition is external to the shutter glasses.

The shutter glasses may further include a signal receiver which receives a synchronization signal to open and close the left-eye shutter and the right-eye shutter, wherein the second error condition is based on an intensity of the received synchronous signal, and the controller generates the error signal if the intensity of the received synchronous signal is less than a predetermined level.

The shutter glasses may further include a battery which supplies power to the left-eye shutter and the right-eye shutter, wherein the first error condition is based on a power level of the battery, and the controller generates the error signal when the power level of the battery is less than a predetermined critical value.

The shutter glasses may further include a shutter driver which drives the left-eye shutter and the right-eye shutter, wherein the first error condition is based on an operation of the shutter driver.

The shutter glasses may further include an error indicator which informs a user of the error, wherein the controller outputs the error signal to the error indicator.

The error indicator may include a light emitting diode.

The error indicator may include a liquid crystal display part.

The shutter glasses may further include a user interface to send an error detection mode signal to the controller, wherein the controller may determine whether the one of the first and the second error condition exists in response to receiving the error detection mode signal from the user interface and enables the error indicator.

The controller may output the error signal so that the error is displayed in an external display apparatus.

The controller may include an IR transmitter.

The shutter glasses may further include a user interface to send an error detection mode signal to the controller, wherein the controller determines whether the one of the first and the second error condition exists in response to receiving the error detection mode signal from the user interface and outputs the error signal to the display apparatus.

A display system may include: a display apparatus which displays a left-eye image and a right-eye image; and shutter glasses which comprises a left-eye shutter and a right-eye shutter which open and close in synchronization with the left-eye image and the right-eye image, respectively, wherein the shutter glasses comprises a controller which generates an error signal indicating an error if at least one of a first and a second error condition exists, wherein the first error condition is internal to the shutter glasses, and the second error condition is external to the shutter glasses.

The shutter glasses may further include a signal receiver which receives a synchronization signal to open and close the left-eye shutter and the right-eye shutter, and wherein the second error condition is based on an intensity of the received synchronous signal, and the controller generates the error signal if the intensity of the received synchronous signal is less than a predetermined level.

The controller may output the error signal to the display apparatus, and the display apparatus may further include a receiver which receives the error signal and an error indicator which informs a user of the error based on the received error signal.

The error indicator comprises a user interface generator which generates a graphic user interface based on the received error signal.

A control method of the display system having a display apparatus which displays a left-eye image and a right-eye image and shutter glasses which comprise a left-eye shutter and a right-eye shutter, wherein the method may include: determining whether at least one of a first and a second error condition exists, wherein the first error condition is internal to the shutter glasses, and the second error condition is external to the shutter glasses; and informing a user of an error if it is determined that the at least one of the first and a second error condition exists.

The display apparatus may further include an error display operable to display the error, wherein the informing the user of the error may include adjusting a display state of the error display corresponding to at least one of a degree and a type of the error.

The informing the user of the error may include displaying a graphic user interface including the error on the display apparatus.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a display system according to an exemplary embodiment;
FIG 2 is a control block diagram of a display system according to an exemplary embodiment;
FIG 3 is shutter glasses of a display system according to an exemplary embodiment;
FIG 4 is other shutter glasses of a display system according to an exemplary embodiment;
FIG 5 is still another shutter glasses of a display system according to an exemplary embodiment;
FIG 6 is a control method for explaining informing error of a display system according to an exemplary embodiment;
FIG 7 is another control block diagram of a display system according to an exemplary embodiment; and
FIG 8 is a graphic user interface displayed a display system according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the embodiments set forth herein. Descriptions of well-known parts are omitted for clarity, and like reference numerals refer to like elements throughout.

Referring to the accompanying drawings, exemplary embodiments are as follows.

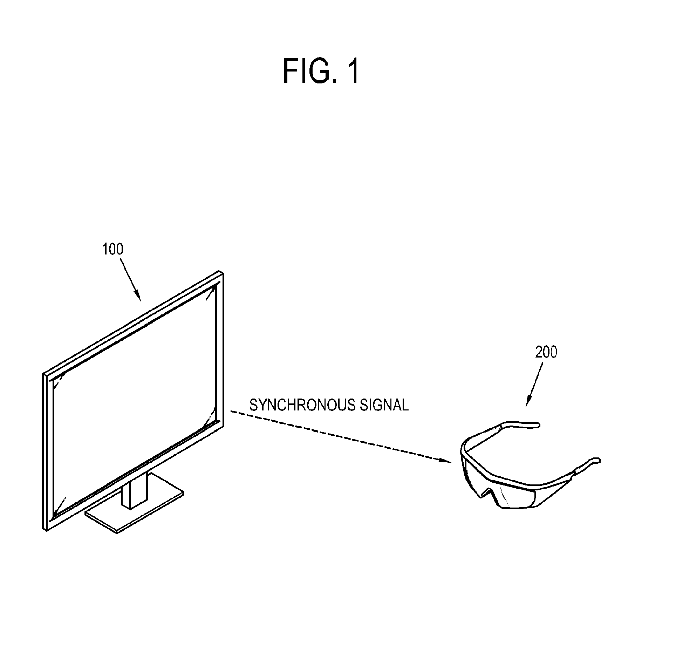

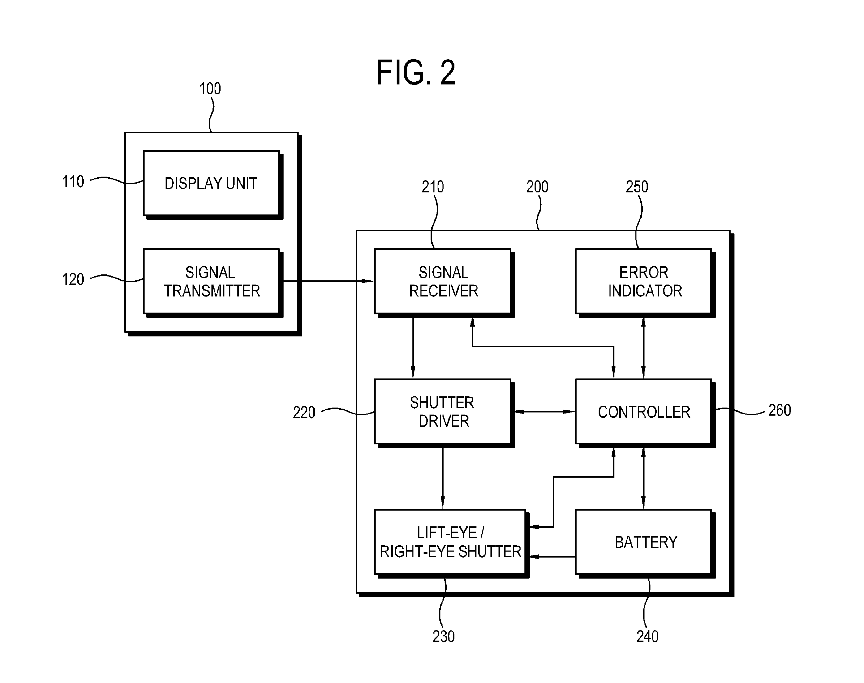

FIG. 1 illustrates is a display system according to an exemplary embodiment and FIG. 2 is a control block diagram of a display system according to an exemplary embodiment.

As shown FIG. 1, the display system includes a display apparatus 100 and a pair of shutter glasses 200. The display apparatus 100 displays a stereoscopic image configured with a left-eye image and a right-eye image. The shutter glasses 200 include a left-eye shutter and a right-eye shutter alternately opening/closing in synchronization with the left-eye image and the right-eye image displayed in the display apparatus 100. The display apparatus 100 displays sequentially and alternately the left-eye image and the right-eye image in a unit of a frame. Therefore, a user may show the divided left-eye image and right-eye image through opening and closing of the left-eye shutter and the right-eye shutter.

The display apparatus 100 includes a display unit 110 displaying an image and a signal transmitter 120 transmitting a synchronous signal to the shutter glasses 200. The display apparatus 100 in this exemplary embodiment may include a TV processing and displaying a broadcasting signal, a monitor connected to a computer, or a portable terminal such as a mobile phone to be capable to receive and display a 3D video signal, i.e., a solid image signal. The display apparatus 100 may further include a signal receiver (not shown) receiving an image signal from an image source, a signal processor (not shown) processing the received image signal and other known elements.

The display unit 110 displays an image based on a processed image signal. The display unit 110 may include a liquid crystal display panel having a liquid crystal layer, an organic light emitting diode panel having an organic light emitting material, a plasma display panel, or the like. The display unit 110 may include a panel driver driving the panel.

The signal transmitter 120 generates a synchronous signal and transmits the synchronous signal to the shutter glasses 200 so that the left-eye shutter and the right-eye shutter of the shutter glasses 200 alternately open and close in synchronization with the left-eye image and the right-eye image displayed in the display apparatus 100. The synchronous signal may be transmitted by a pair of the left-eye image and the right-eye image, which is in unit of two frames or by each of the left-eye image and the right-eye image. The synchronous signal has a proper frequency which could prevent interfering with other signals and maintain reliable transmission ratio. The signal transmitter 120 may communicate with the shutter glasses 200 through one of infrared communication, Bluetooth communication and radio frequency communication.

The shutter glasses 200 include a signal receiver 210, a shutter driver 220, a left-eye/right-eye shutter 230, a battery 240, an error indicator 250 and a controller 260 controlling the foregoing elements.

The signal receiver 210 receives the synchronous signal from the display apparatus 100 and outputs it to the shutter driver 220.

The shutter driver 220 performs auto-gain control (AGC) of the input synchronous signal and drives the left-eye shutter/right-eye shutter 230. The shutter driver 220 may divide the synchronous signal, delay the divided synchronous signal and/or change a phase of the divided synchronous signal.

The left-eye/right-eye shutter 230, which may include liquid crystal glasses, opens and closes according to controlling by the shutter driver 220.

The battery 240 supplies power to components of the shutter glasses 200 such as the left and right-eye shutters 230 and the shutter driver 220. The left-eye/ right-eye shutter 230 may work improperly if a power level of the battery 240 is less than a predetermined critical level. The battery 240 may include a rechargeable secondary cell.

As noted above, the error indicator 250 informs a user of an error of the shutter glasses 200. The error indicator 250 may further include a display part visually displaying the error and/or an audio output part outputting a warning sound such as a beep. Additionally, the error indicator 250 may change a display state and/or adjust a sound corresponding to a degree. Moreover, the error indicator 250 may change a display state and/or adjust a sound to indicate a type of error (e.g., internal, external, received synchronization signal, battery, hardware fault, etc.).

Generally, the controller 260 determines whether at least one of the left-eye shutter and the right-eye shutter 230 normally opens and closes, and generates an error signal indicating an error if it is determined that the at least one of the left-eye shutter and the right-eye shutter 230 abnormally opens and closes. The generated error signal is then output to the error indicator 250 so that a user may recognize an error condition occurring in the shutter glasses 220.

An abnormal opening and closing of one of the shutters may occur due to an external error condition. For example, the controller 260 may determine that a received synchronous signal from the display apparatus 100 has a problem when intensity of the synchronous signal is less than a predetermined level, and then generate the error signal based on the determination of the error condition. One way of evaluating the intensity of the received synchronous signal is to analyze the gain value obtained by the auto gain control. The less the intensity of the synchronous signal is, the larger the gain value obtained by the auto gain control is. Therefore, the controller 260 may determine that the intensity of the synchronous signal is less than the predetermined level if the gain value is more than a predetermined value. On the other hand, the controller may simply analyze the received synchronous signal to determine its intensity.

Alternatively, an abnormal opening and closing of one of the shutters may also occur due to an internal error condition. For example, the controller 260 may generate an error signal when the power level of the battery 240 is less than the predetermined critical level or an error occurs in the shutter driver 220. This is just one example of an internal error condition (i.e., internal to the shutter glasses). In addition, the controller 260 may generate an error signal when the left-eye/ right-eye shutter 230 have a problem with a shutter movement.

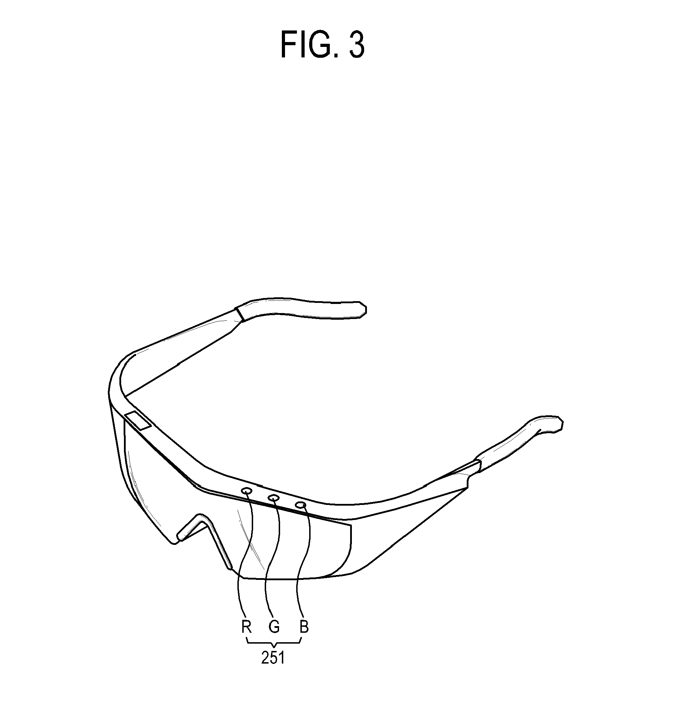

FIG. 3 shows the shutter glasses of a display system according to an exemplary embodiment of FIG. 1. As shown FIG. 3, the error indicator 250 may include at least one light emitting diode 251 emitting lights having various colors, for example red light, green light and blue light. The light emitting diode 251 may be positioned on a glasses frame or a rim of the left-eye/ right-eye shutter 230. The light emitting diode 251 may emit a different color light corresponding to at least one of a degree and a type of an error. For example, the light emitting diode 251 may emit red light when the synchronous signal has an error, emit green light when the power level of the battery 240 is less than the predetermined critical value or emit blue light when the shutter driver 220 has a problem. In addition, it may be possible for the light emitting diode 251 to show a degree of an error by flickering in various frequencies. For instance, as the power level of the battery 240 is lower, a flicker frequency of the light emitting diode 251 may be higher. The weaker the intensity of the synchronous signal is, the less the brightness of the light emitting diode 251 may be. Thus, a user may know what kind of error occurs and how serious the error is through the flicker frequency of light and/or the brightness of the light.

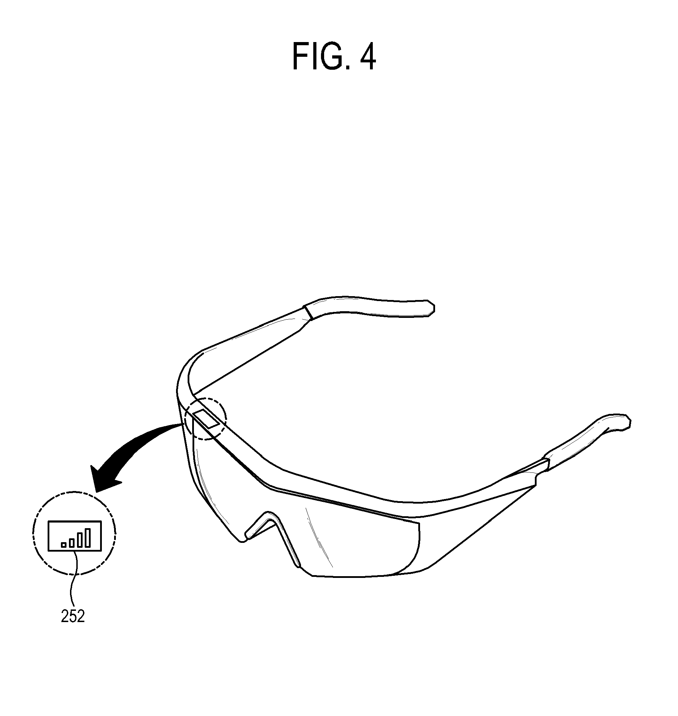

FIG. 4 is another example of shutter glasses of a display system according to an exemplary embodiment. As shown FIG 4, the shutter glasses 200 include a liquid crystal display part 252. The liquid crystal display part 252 displays a symbol image describing a type of an error, e.g., an icon or a bar image indicating a power level of the batter 240 or the intensity of the synchronous signal. The liquid crystal display part 252 make a user know intuitively that an error condition exists and/or to know the type of error. It should be noted that the liquid crystal display part 252 is merely an example, the shutter glasses 200 may include a plasma display panel or an organic light emitting diode panel, or the like.

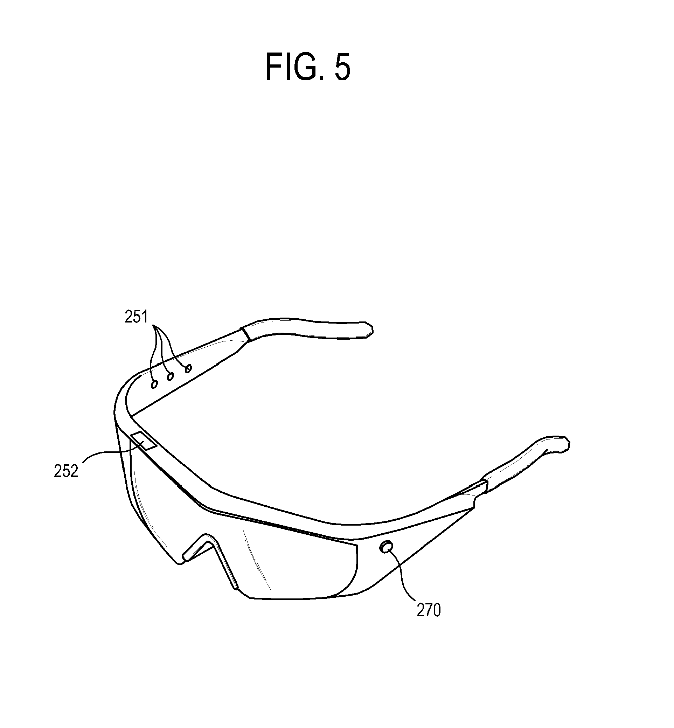

FIG. 5 illustrates shutter glasses according to another exemplary embodiment. The shutter glasses 200 additionally include a user interface 270. The user interface may be used to select a detection function of an error, i.e., to toggle the error condition checking functionality of the shutter glasses 200. For example, the user interface 270 may operate to simply turn on/off power to the error indicator 250, and/or may also operate to turn off the error detection functionality within the controller 260.

If the shutter glasses 200 include the error indicator 251 or 252, the controller 260 may always or periodically determine whether an error occurs, and the controller 260 then may output the error signal, which is generated based on the result of the determination to the error indicator 251 or 252 to indicate the occurrence of error condition and/or, depending on the type of error indicator 251 or 252, the type of error condition. That is, the error indicator 251 or 252 may help increase the usability of the shutter glasses 200 and, by informing a user of the error, easily allow the diagnosis and repair of the shutter glasses 200. However, the error indicator 251 or 252 may increase power consumption.

Since the shutter glasses 200 are portable and are supplied power by the battery 240, power consumption may be an important concern. The controller 260 may determine whether the shutter glasses 200 normally opens and closes and enable the function of the error indicator 251 or 252 when a signal to select a detection function of an error is received from the user interface 270 in order to minimize power consumption. That is, the user interface 270 may be used to send a signal to the controller to turn the error indicator 251 or 252 on/off, and/or to instruct the controller 260 to begin checking for an error condition. Likewise, if the user senses a malfunction of the left-eye or right-eye shutter 230 while wearing the shutter glasses 200, the user can use the user interface 270 to initiate an error detection mode, which can check whether the error is internal or external to the shutter glasses 200.In this case the user may user the user interface 270 to check for an error condition at one point in time. However the user interface 270 may operate the shutter glasses 200 so as to continually check for error conditions.

The user interface 270 may include a button, switch and/or touch pad for the user's manipulation. The touch pad may be merged with the liquid crystal display part 252.

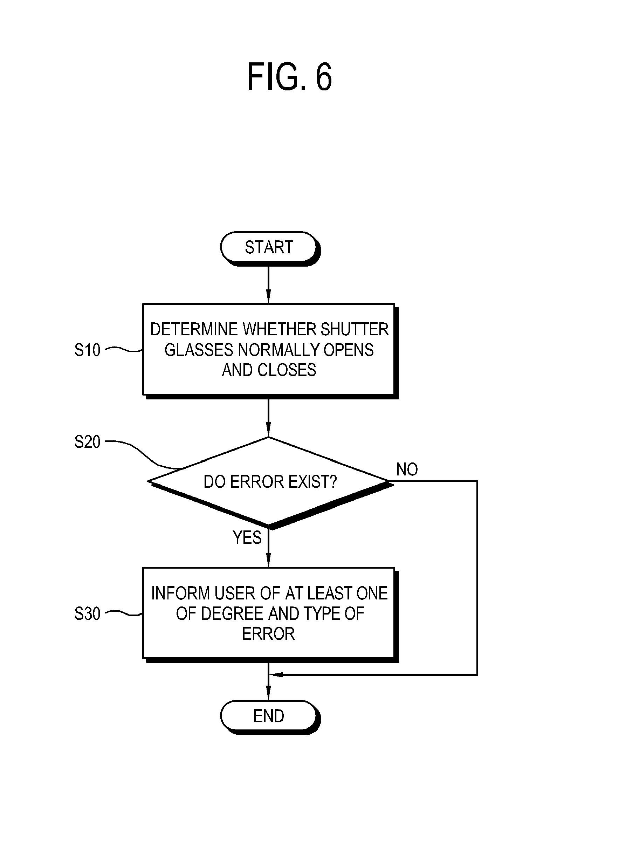

FIG. 6 is a control method for explaining informing error of a display system according to an exemplary embodiment.

At operation S10, the controller 260 determines whether at least one of the left-eye shutter and the right-eye shutter 230 normally opens and closes. Operation S10 may be performed always, periodically or when the selecting signal is received from the user interface 270.

If it is determined that an error condition exists (e.g., with respect to the opening and closing of left-eye/right-eye shutter 230), at operation S20, then at operation S30, the controller 260 generates the error signal and informs a user of the error by outputting the error signal to the error indicator 250. The operation S30 may include changing an error display state or adjusting a sound state based on at least one of a degree and a type of an error.

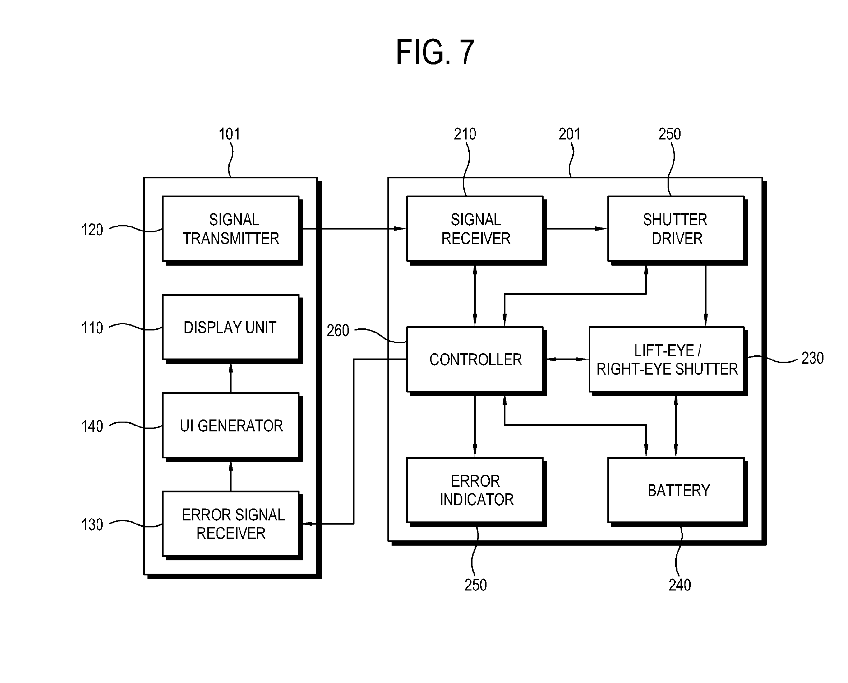

FIG. 7 is a control block diagram of a display system according to an exemplary embodiment. As shown therein, the display apparatus 101 includes an error signal receiver 130, a user interface (UI) generator 140, a display unit 110 and a signal receiver 120.

The controller 260 of the shutter glasses 201 may output the error signal to not only the error indicator 250 but also the display apparatus 101. The controller 260 may include an IR transmitter (not shown) for outputting an IR signal or various other communication modules for facilitating communication between the shutter glasses 201 and display apparatus 101 (e.g., via radio frequency communication, Bluetooth communication, Wi-Fi communication and Zigbee communication, etc.). Further, the error indicator 250 may be omitted.

The error signal receiver 130 outputs the received error signal to the UI generator 140. The UI generator 140 may include an error indicator and thereby generate a graphic user interface based on the received error signal.

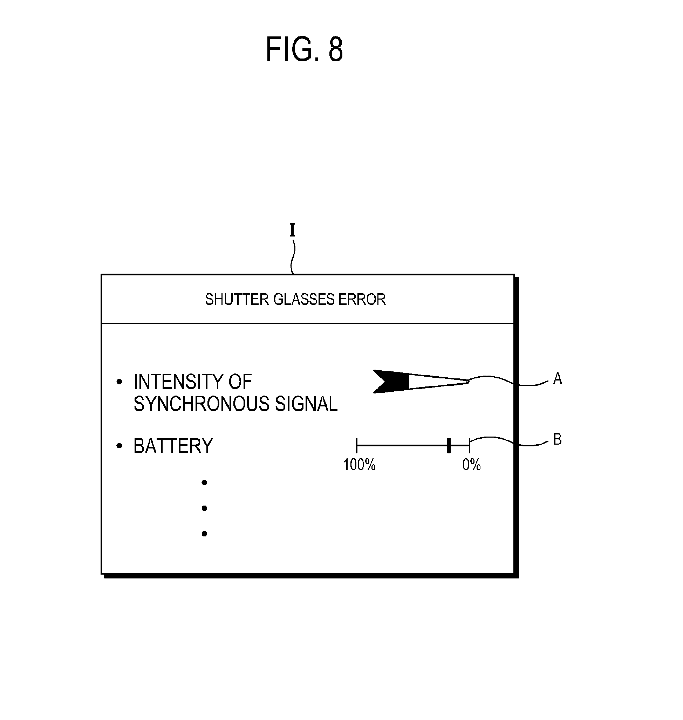

FIG. 8 shows a graphic user interface (GUI) according to an exemplary embodiment. As shown therein, GUI "I" includes an arrow A indicating a degree of an error and a level bar B referring to a power level of the battery 240. The user interface generator 140 generates the GUI I based on the error signal from the controller 260 and displays the GUI I on the display unit 110 so that a user may easily recognize the error. The GUI I may display a solution item (not shown) to correct the error besides the degree or the type of the error. The GUI I may further include an item to reset the signal transmitter 120 of the display apparatus 101. For example, if the left-eye/right-eye shutter may function abnormally due to a weak intensity of the synchronous signal (due to an internal or an external error condition).

The display system may further include a user interface (not shown) to select a detecting function of an error. The user interface may be provided with the display apparatus 101 and/or the shutter glasses 201. The user interface may include a function key and/or a shortcut key in a remote controller (not shown) for controlling the display apparatus 101. In this case, the controller 260 may determine whether the left-eye/right-eye shutter normally opens and closes when a selecting signal to select the detecting function is received from the user interface (i.e., when the error detection mode is operating).

Although a few exemplary embodiments have been shown and described, it will be appreciated by those skilled in the art that changes may be made in these embodiments without departing from the principles and spirit of the invention, the scope of which is defined in the appended claims and their equivalents.

## Claims

1. A display system comprising:
a display apparatus which displays a left-eye image and a right-eye image; and
shutter glasses which comprises a left-eye shutter and a right-eye shutter which open and close in synchronization with the left-eye image and the right-eye image, respectively;
wherein the shutter glasses comprises a controller which generates an error signal indicating an error if at least one of a first and a second error condition exists, wherein the first error condition is internal to the shutter glasses, and the second error condition is external to the shutter glasses.

2. The display system according to claim 1, wherein the shutter glasses further comprises a signal receiver which receives a synchronization signal to open and close the left-eye shutter and the right-eye shutter, and
wherein the second error condition is based on an intensity of the received synchronous signal, and the controller generates the error signal if the intensity of the received synchronous signal is less than a predetermined level.

3. The display system according to claim 1, wherein the shutter glasses further comprises a battery which supplies power to the left-eye shutter and the right-eye shutter, wherein the first error condition is based on a power level of the battery, and the controller generates the error signal if the power level of the battery is less than a predetermined critical value.

4. The display system according to claim 1, wherein the shutter glasses further comprises a shutter driver which drives the left-eye shutter and the right-eye shutter, wherein the first error condition is based on an operation of the shutter driver.

5. The display system according to one of claims 1 to 4, wherein the shutter glasses further comprises an error indicator which informs a user of the error, the controller outputs the error signal to the error indicator.

6. The display system according to claim 5, wherein the error indicator comprises a light emitting diode.

7. The display system according to claim 5, wherein the error indicator comprises a liquid crystal display part.

8. The display system according to claim 5, further comprising a user interface to send an error detection mode signal to the controller,
wherein the controller determines whether the one of the first and the second error condition exists in response to receiving the error detection mode signal from the user interface and enables the error indicator.

9. The display system according to one of claims 1 to 4, wherein the controller outputs the error signal to the display apparatus, and
wherein the display apparatus further comprises a receiver which receives the error signal and an error indicator which informs a user of the error based on the received error signal.

10. The display system according to claim 9, wherein the error indicator comprises a user interface generator which generates a graphic user interface based on the received error signal.

11. The display system according to claim 9, wherein the controller comprises an IR transmitter.

12. The display system according to claim 9, further comprising a user interface to send an error detection mode signal to the controller,
wherein the controller determines whether the one of the first and the second error condition exists in response to receiving the error detection mode signal from the user interface and outputs the error signal to the display apparatus.

13. A control method of the display system having a display apparatus which displays a left-eye image and a right-eye image and shutter glasses which comprise a left-eye shutter and a right-eye shutter, the method comprising:
determining whether at least one of a first and a second error condition exists, wherein the first error condition is internal to the shutter glasses, and the second error condition is external to the shutter glasses; and
informing a user of an error if it is determined that the at least one of the first and a second error condition exists.

14. The control method according to 13, wherein the display apparatus further comprises an error display operable to display the error, and
wherein the informing the user of the error comprises adjusting a display state of the error display corresponding to at least one of a degree and a type of the error.

15. The control method according to 13, wherein the informing the user of the error comprises displaying a graphic user interface including the error on the display apparatus.
